# EUROPEAN PATENT APPLICATION

(11) **EP 1 128 682 A1**
(43) Date of publication of application: **29.08.2001**
(21) Application number: 00440050.3
(22) Date of filing: 21.02.2000
(51) Int. Cl.: H04Q 3/62, H04M 3/42, H04M 7/00, H04L 12/66

(54) **Voice-data integration architecture for PABX**

(71) Applicant: ALCATEL, 75008 Paris (FR)
(72) Inventor: Poupaert,Dominique, F-67000 Strasbourg (FR); Penet,Xavier, F-67400, Illkirch Graffenstaden (FR)
(74) Representative: Menzietti, Domenico, Dipl.-Ing

(57) **Abstract**

An apparatus (1) interconnecting selectively at least one data based apparatus with at least one telecommunications device. The apparatus (1) comprises
- an data bus controller (4) mastered by a central processing unit CPU (7) and to which said at least one data based apparatus is selectively electrically connected,
- a switching unit (5) mastered by said CPU (7) and to which said at least one telecommunications device is selectively electrically connected, and
- an electrical link (3) connecting said data bus controller (4) together with said switching unit (5) for the transfer of data between said data based apparatus and said telecommunications device.

## Description

The present invention relates to an apparatus interconnecting selectively at least one data based apparatus with at least one telecommunications device as set forth in the preamble of claim 1, to a private automatic branch exchange and to a server.

Nowadays the number of data based apparatus like a personal computer (PC) increased so much that even in most small size companies a local area network (LAN) is present. Indeed, only then a practical sharing of data will be possible between the different PC which are connected throughout the company or the organization by the LAN. Such construction is well known and implies a dedicated set of wiring connections to interconnect each PC to the LAN.

Often is also present in the company a private automatic branch exchange (PABX). With such an apparatus, it is possible to connect a plurality of telecommunications device like a telephone or a facsimile together into a local PABX network. It is then no more necessary to provide each person in the company with their own private phone line, which would be quite expensive. Since more and more the PABX are integrated into servers like computers supplied with graphical user interface such that their use are simplified, and due to the development of services concerning telecommunications, the popularity of such PABX became widespread also in small and medium size companies.

The distinction between a telecommunications device and a PC shrinks enormously since new PC now contain integrated equipment, such as microphones and loudspeakers. With such an equipment, the user is able to perform standard telecommunications functions such as allowing the user to speak into the microphone for voice communication with a remote party. Furthermore, the development of what is called voice over internet protocol (VolP) which permits to perform a telecommunications over the internet, increase the importance of a interconnection between both networks i.e. the LAN and the local PABX network.

In US5,862,134 is described a way to simplify such interconnection between the two networks. It is based on the main characteristic of the use of a single wiring connection. Specifically, telecommunications devices as well as PC within the company are connected to the same LAN. That LAN is in turn connected to a telephony computer interface. It is then this interface which is connected to the telephones lines, and forms an interface between telephone line communications and data packets for real time communications.

The solution described in US5,862,134 implies that each telecommunications device is connected to the LAN via a specific interface which will enable that speech signal can be converted into LAN packet form. But such interface increases substantially the cost of a telecommunications device since it shall contain at least a codec and/or a modem. Despite to seem on a first sight as an economic solution, the drawback of the need of an interface for each telecommunications device cannot be neglected. On top of that, it is nowadays quite often the case that the LAN and the local PABX network are anyway already installed. Therefore, the solution of US5,862,134 can absolutely not be advantageous on a financial point of view.

It is an object of the invention to provide an apparatus as described in the preamble, which will permit a direct and simple interconnection between at least one telecommunications device and at least one data based apparatus without the need of reorganizing the existing distinct wiring connection between the telecommunications devices and the data based apparatus.

This object is attained, according to the invention, by an apparatus as claimed in claim 1, a private automatic branch exchange and a server as claimed in claims 9 and 11 respectively.

It is taken advantage of the already present wiring connection of the telecommunications devices and the data based apparatus. Indeed, the apparatus interconnecting selectively at least one data based apparatus with at least one telecommunications device according to the invention is used as a central one. In case there exits several telecommunications devices, all organized via a local network, and several data based apparatus (PC), all organized via a separated network like a LAN, they will then be all directly connected to the said apparatus since each network will end-up at this central apparatus. This apparatus will selectively build a link between one or several PC with one or several telecommunications devices.

Furthermore, the present solution avoids any complementary set up of the telecommunications devices. The signals coming out of the telecommunications devices connected with said apparatus via said switching unit will be processed by the switching unit itself so to be transferable through the link to one data based apparatus connected at said data bus controller. Also the switching unit will process any data sent by one data based apparatus before forwarding it to the destined telecommunications device.

An embodiment of the apparatus according to the invention is conceived in such a way that the switching unit itself contains the means to convert raw signals originated from a telecommunications device into a bit stream processible by said central apparatus so to be transferable to a data based apparatus. For that, the most popular method in this field, which is called a pulse code modulation PCM method, could be advantageously applied. The switching unit build as a matrix allows to connect to it a high number of telecommunications devices, a condition when using a PABX.

A further embodiment is characterized in that a digital signal processor DSP is directly connected to the link between said switching unit and said data bus controller. It acts as a microprocessor that performs calculations on digitized signals originated from telecommunications devices partly to recognize the different signals embedded in it. Generally, it manages the transfer of data over the electrical link between the switching unit and the data bus controller. The DSP may e.g. be called upon to compress audio and/or video signal in almost real time.

Advantageously, such apparatus can be conceived as an application specific integrated circuit ASIC containing the data bus controller to which all the data based apparatus are connected as well as the switching unit itself. Such ASIC and particularly the electrical link between said data bus controller and said switching unit or better the DSP itself will be controlled via a central processing unit like the one of a PABX. In the latter case, the apparatus can then be simply integrated into it.

The present invention relates further to an apparatus which is characterized in that it is set up on a board such that latter has to be installed on a server like computer. This is particularly interesting in the case all or at least the main services usually performed by a PABX are integrated on that server.

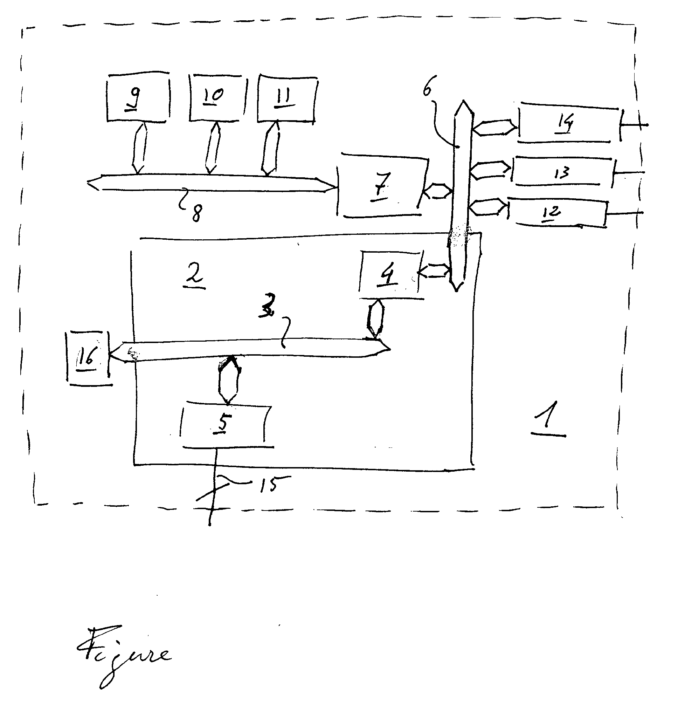

Further advantageous features of the invention are defined in the dependent claims and will become apparent from the following description and the drawing.

One embodiment of the invention will now be explained in more detail with reference to the accompanying drawing, in which:

The figure is a schematic of the apparatus according to the invention.

The apparatus 1 according to the invention as disclosed in the unique figure comprises an application specific integrated circuit ASIC 2. On that ASIC 2 is integrated a data bus controller 4 to which at least one data based apparatus is selectively electrically connected. Also is integrated a switching unit 5 to which at least one telecommunications device is selectively electrically connected, possibly via a bus 14. Also any external digital telecommunications line (public switched telephone network) could be connected to it. The transfer of data on the ASIC 2 between said data bus controller 4 and said switching unit 5 will occur over an electrical link 3 made as a bus.

The data bus controller 4 consists in the present embodiment of a peripheral component interconnect PCI-interface. A PCI-bus 6 is electrically connected to it, over which transits any data coming from or destined to a data based apparatus. If the width of the data transferred over the electrical link 3 and the PCI-bus 6 are not the same (e.g. 16 and 32 bit respectively) then an adjustment is performed by the data bus controller 4. Also electrically connected to that PCI-bus 6, is a central processor unit CPU 7. Latter will control the whole ASIC 2. Over a local host bus 8 connected to that CPU 7 is given the possibility to storage at least part of the data on a mass storage 9 like a hard disk. Furthermore, the local host bus 8 has access to a basic input/output system BIOS 10 over which peripheral devices needed for a correct use of the apparatus 1 can be connected. Also a data storage device 11 in form of a random access memory RAM or dynamic RAM is connected to that local host bus 8. There can be storage among other things, the program code which will perform all the steps needed to control that ASIC 2.

The data based apparatus are usually not directly connected to the data bus controller 4 but to some controller which are themselves connected to the PCI-bus 6. Such controller can be e.g. an Ethernet controller 12 to which the local area network LAN of the company will be connected. This LAN will interconnect then the different data based apparatus mostly personal computers PC together, allowing sharing of data between the different PC. A controller for asymmetric digital subscriber line ADSL 13 can be connected to that PCI-bus 6 together or alternatively to the Ethernet controller 12. Also a serial bus like a FireWire acting as a controller 14 may be electrically connected to said bus 6 so to be connected to the data bus controller 4 of the ASIC 2. Latter controller 14 will contain a standard serial bus interface offering high-speed communications and isochronous real-time data services typically used for multimedia purposes.

The data transiting through the bus, which acts as an electrical link 3 between the data bus controller 4 and the switching unit 5, will be managed by a digital signal processor DSP 16. The DSP may be advantageously controlled by the CPU 7 via the bus 6, the data bus controller 4 and the same link 3.

The central apparatus 1 is primarily destined to permit a direct and therefore fast transfer of data between a data based apparatus and a telecommunications device i.e. to transfer computer like data destined to a telecommunications device and vice versa. It is particularly advantageous to perform the necessary conversion like a decompression of a signal, originated from a telecommunications device, after an a- or µ-law by some means on the switching unit 5. This is performed by using PCM method. It is a digital modulation method that encodes (linearizes) a pulse amplitude modulated signal into a PCM signal. In that case, the bus 15 may be used to transfer such kind of signals. This does not stop to connect to that bus 15 analog telecommunications devices. Only, an interface (analog/digital converter) must then be interposed. Also, packet switched channel like B-channel of an ISDN-connection will be directly processed by the switching unit 5.

The switching unit 5 itself is conceived as a NxN matrix i.e. showing 2xN slots. Therefore it allows to connect to it, via the bus 15, 2xN telecommunications devices at a maximum. Usually, it will be less since few of the slots will be used to transmit control carriers. On the switching unit 5 will also occur the selection to which telecommunications devices connected to it will be send the received data.

A close interconnection between the DSP 16 and the switching unit 5 is present due to the role of the former. Not only it will be used to compress audio or video originated messages but also it will be able to detect special signals like identification signals sent as a calling line identification presentation CLIP or any dual tone multi-frequency DTMF signal e.g. a calling alerting signal CAS. Furthermore, the DSP 16 is able to treat the signal in series as it will reach the switching unit 5. Indeed all telecommunications devices are connected to that switching unit 5 via the bus 15 in series. Alternatively, the DSP 16 could also be integrated onto the ASIC 2.

The CPU 7 plays also an important role to permit a direct and very fast transfer of data between a telecommunications device and a data based apparatus. It handles the data stream coming from the switching unit 5 (originally audio/video message) as well as the one coming from the data bus controller 4 (originated from a data based apparatus) in a same way. If needed, the CPU 7 is able to buffer at least part of the data stream transiting over the link 3 by using the data storage device 11 via the local host bus 8. Unlike in prior art, the data stream of an audio/video message will be directly transferred to the data bus controller 4 without further conversion. The processing of data at same protocol level by the data bus controller 4 as well as the switching unit 5 permits very advantageously to let mastering the former as well as the latter by the same CPU 7.

The selection to which data based apparatus, the transiting data will be forwarded via the PCI-bus 6 and a data controller 12, 13, 14, is performed by the CPU 7 via the data bus controller 4. Despite that the CPU 7 controls the PCI-bus 6, the data controller 12, 13, 14 may have their own CPU.

Such an apparatus 1 is primarily destined to permit a direct transfer of data, i.e. of purely data based messages as well as audio/video messages, between a data based apparatus and a telecommunications device. Due to the above disclosed architecture, with the direct access of the DSP 16 and the CPU 7 on the link 3, such apparatus 1 is ideally conceived to be integrated into a PABX. In that case, the CPU 7 may be the host CPU of the PABX itself.

It is also possible to conceive such electrical link 3 between the data bus controller 4 and the switching unit 5 in such a manner to be integrated on a board. Also in that case, the use of an ASIC like the ASIC 2 may be most preferable. But the present invention does not restrict itself to that form. When implemented on a board, it is then suitable to be integrated into a server like computer, typically, a computer performing most if not all the tasks managed by a classical PABX. Unlike shown in figure, the CPU mastering the data bus controller 4 as well the switching unit 5 may be the one of the server itself. In that way, it is possible to add the advantages of such a direct link between telecommunications devices and data based apparatus to the general characteristics of computer telephony.

## Claims

1. An apparatus (1) interconnecting selectively at least one data based apparatus with at least one telecommunications device **characterized in**
**that** it comprises
• a data bus controller (4) mastered by a central processing unit CPU (7) and to which said at least one data based apparatus is selectively electrically connected,
• a switching unit (5) mastered by said CPU (7) and to which said at least one telecommunications device is selectively electrically connected, and
• an electrical link (3) connecting said data bus controller (4) to said switching unit (5) for the transfer of data between said data based apparatus and said telecommunications device.

2. An apparatus (1) according to claim 1 characterized in that said switching unit (5) contains means to encode a signal originated from said telecommunications device into a specific bit stream processible by said data based apparatus.

3. An apparatus (1) according to claim 2 characterized in that the switching unit (5) is build as a NxN matrix, allowing to connect to it up to 2xN telecommunications devices.

4. An apparatus (1) according to claim 1 characterized in that it comprises a digital signal processor DSP (16) directly connected to said electrical link (3), to process said data.

5. An apparatus (1) according to claim 1 characterized in that said data based apparatus is electrically connected to said data bus controller (4) via a bus (6) to which is electrically connected said CPU (7).

6. An apparatus (1) according to claim 5 characterized in that it contains at least one data controller (12, 13, 14) electrically connected to said bus (6), among others to distribute said data to the right data based apparatus connected to said data controller (12, 13, 14).

7. An apparatus (1) according to claim1 characterized in that said electrical link (3) is a bus on an application specific integrated circuit ASIC (2) containing also said data bus controller (4) as well as said switching unit (5).

8. An apparatus (1) according to claim 1 characterized in that said CPU (7) is part of said apparatus (1).

9. Private automatic branch exchange characterized in that it comprises an apparatus (1) according to claim 1.

10. Private automatic branch exchange according to claim 9, characterized in that said CPU (7) is the one of the private automatic branch exchange.

11. Server characterized in that it comprises an apparatus (1) according to claim 1.

12. Server according to claim 11, characterized in that said CPU (7) is the one of the server.
